# EUROPÄISCHE PATENTSCHRIFT

(11) **EP 2 154 345 B1**
(45) Veröffentlichungstag und Bekanntmachung des Hinweises auf die Patenterteilung: **27.09.2017**
(21) Anmeldenummer: 09009707.2
(22) Anmeldetag: 28.07.2009
(51) Int. Cl.: F01N 3/22, F01N 3/32, F01N 3/025, F02B 37/18, F02B 37/16, F01N 3/20, F01N 13/00, F01N 3/023

(54) **Verfahren und Vorrichtung zur Regeneration eines im Abgasstrang einer Brennkraftmaschine angeordneten Partikelfilters**
Method and device for regenerating a particulate filter built into the exhaust gas line of a combustion engine
Procédé et dispositif de régénération d'un filtre à particules agencé dans le système d'échappement d'un moteur à combustion interne

(30) Priorität: 12.08.2008 DE 102008038720
(43) Veröffentlichungstag der Anmeldung: 17.02.2010
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 0 715 061
- EP-A2- 1 243 767
- WO-A1-01/88346
- DE-A1- 10 354 276

## Beschreibung

Die Erfindung betrifft ein Verfahren zur Regeneration eines im Abgasstrang einer Brennkraftmaschine angeordneten Partikelfilters nach dem Oberbegriff des Anspruchs 1 sowie eine Vorrichtung zur Regeneration eines im Abgasstrang einer Brennkraftmaschine angeordneten Partikelfilters nach dem Oberbegriff des Anspruchs 9.

Insbesondere betrifft die Erfindung ein Verfahren und eine Vorrichtung zur Regeneration von Partikelfiltern bei mit Luftüberschuss betriebenen Brennkraftmaschinen, wie beispielsweise Dieselmotoren oder Benzinmotoren mit Direkteinspritzung, wie sie in Nutzfahrzeugen oder Kraftfahrzeugen zum Einsatz gelangen.

Zur Minimierung der Feinstoffpartikel werden in Fahrzeugen regelmäßig sogenannte Partikelabscheider oder Partikelfilter eingesetzt. Eine Partikelabscheider-Anordnung in Fahrzeugen ist beispielsweise aus der EP 10 727 65 A2 bekannt. Derartige Partikelabscheider unterscheiden sich von den Partikeifiltern dadurch, dass der Abgasstrom entlang der Abscheidestrukturen geführt wird, während bei Partikelfiltern das Abgas durch das Filtermedium hindurchströmen muss. In Folge dieses konstruktiven Unterschiedes neigen Partikelfilter zur Verstopfung, was den Abgasgegendruck erhöht, das heißt eine unerwünschte Druckerhöhung am Abgasausgang einer Brennkraftmaschine hervorruft, was wiederum die Motorleistung mindert und einen erhöhten Kraftstoffverbrauch der Brennkraftmaschine zur Folge hat. Ein Beispiel für eine derartige Partikelfilter-Anordnung ist aus der EP 03 418 32 A2 bekannt.

Bei beiden vorstehend beschriebenen Anordnungen oxidiert jeweils ein stromauf des Partikelabscheiders bzw. des Partikelfilters angeordneter Oxidationskatalysator das Stickstoffmonoxid (NO) im Abgas mit Hilfe des ebenfalls enthaltenen Restsauerstoffes (O₂) zu Stickstoffdioxid (NO₂), und zwar gemäß folgender Gleichung:

2 NO + O₂ <-> 2 NO₂

Das NO₂ setzt sich im Partikelfilter zur Regeneration desselben mit den kohlenstoffhaltigen Feststoffpartikeln zu CO, CO₂, N₂ und NO um. Mit Hilfe des starken Oxidationsmittels NO₂ kann somit eine kontinuierliche Entfernung der angelagerten Feinstoffpartikel erfolgen (passive Regeneration). Allerdings weist diese Vorrichtung und Verfahrensführung den Nachteil auf, dass hier eine große Menge an toxischem NO₂ im Abgastrakt gebildet bzw. vorhanden ist.

Um ein Austreten von NO₂ in die Umwelt zu vermeiden, ist daher darauf zu achten, dass der Bereich zwischen den NO-Oxidationskatalysatoren und den Partikelfiltern ausreichend dicht ausgeführt ist. Neben dem NO₂ wird bei dieser Verfahrensführung an den platinhaltigen NO-Oxidationskatalysatoren aber auch SO₃ aus im Kraftstoff- und/oder Motorenöl enthaltenem Schwefel gebildet. Dieses SO₃ und das NO₂ kondensieren an kalten Stellen im Abgastrakt zu hochkorrosiver Schwefel- bzw. Salpetersäure, so dass die Abgasanlage bis zu den Partikelfiltern in Edelstahl ausgeführt werden muss, um eine Korrosion zuverlässig zu vermeiden.

Des Weiteren ist es bekannt, eine Partikelfilterregeneration durch aktive Anhebung der Abgastemperatur mittels Zuführung und Oxidation von Kohlenwasserstoffen (HC) durchzuführen. Hierzu beschreibt beispielsweise die DE 102 0050 552 40 A1 einen Aufbau, bei dem in einem Hauptabgasstrang in Strömungsrichtung des Abgases gesehen ein HC-Oxidationskatalysator, ein Dieselpartikelfilter und anschließend ein SCR-Katalysator angeordnet ist. Ferner ist ein Nebenabgasstrang vorgesehen, der stromauf des HC-Oxidationskatalysators vom Hauptabgasstrang abgezweigt ist und der nach dem Dieselpartikelfilter wieder in den Hauptabgasstrang einmündet. Im Nebenabgasstrang ist eine Drossel zur Regulierung des abzuzweigenden Abgasstroms, ein Oxidationskatalysator und stromab des Oxidationskatalysators ein Partikelabscheider vorgesehen. Bei einem derartigen Aufbau ist im Normalbetrieb die Drosselklappe geschlossen, so dass der gesamte Abgasstrom durch den Hauptabgasstrang strömt und in diesem gereinigt wird. Während einer Regenerationsphase des Dieselpartikelfilters des Hauptabgasstrangs wird jedoch die Drosselklappe geöffnet, um einen Teil des Abgasstroms durch den Nebenabgasstrang an dem Dieselpartikelfilter vorbei zu leiten und die Abgasströme durch den Hauptabgasstrang und den Nebenabgasstrang an einem Mischpunkt stromauf des SCR-Katalysators wieder zusammenzuführen.

Durch diese Betriebsweise wird der Abgasmassenstrom durch den Dieselpartikelfilter während dessen Regenerationsphase verringert, so dass nur die Temperatur einer geringeren Abgasmenge angehoben werden muss und der Dieselpartikelfilter mit einer geringeren Energiezufuhr regeneriert werden kann. Zusätzlich soll durch die Aufteilung des Abgasmassenstroms und die nachfolgende Mischung des eine hohe Temperatur aufweisenden Abgasstroms des Hauptabgasstrangs und des eine niedrige Temperatur aufweisenden Abgasstroms des Nebenabgasstrangs am Mischpunkt die Temperatur des Abgasstroms durch den SCR-Katalysator wiederum reduziert werden können. Durch den Partikelabscheider im Nebenabgasstrang soll zudem verhindert werden, dass ein Abgasstrom ohne Rußpartikelabscheidung aus dem Abgasstrang austreten kann.

Die Zugabe der Kohlenwasserstoffe zu den Oxidationskatalysatoren erfolgt durch eine, diesen unmittelbar vorgeschaltete Injektionsvorrichtung. Da die Oxidationskatalysatoren bei einem derartigen Aufbau auch im Nicht-Regenerationsbetrieb NO zu NO₂ oxidieren, findet auch im Nicht-Regenerationsbetrieb eine, wenngleich auch geringe passive Filterregeneration mit Hilfe von NO₂ statt. Das heißt, dass es bei einem derartigen Aufbau auch im Nicht-Regenerationsbetrieb zu einer Bildung von NO₂ kommt, das dann in der Regel unverbraucht emittiert wird. Aufgrund der Toxizität des NO₂ ist dies jedoch unpraktikabel und unerwünscht.

Ersichtlich ist ein derartiger Aufbau relativ bauteilintensiv und zudem wenig kompakt, so dass sich ein insgesamt großes Bauvolumen ergibt.

Aus der DE 103 54 276 A1 ist eine Abgasreinigungsvorrichtung für Verbrennungsmotoren bekannt, bei der ein Feststofffilter und ein vor dem Filter angeordneter Oxidationskatalysator vorgesehen sind. Zudem ist hier auch eine Steuerungseinrichtung für eine erzwungene Filterregeneration vorgesehen, die bei der erzwungenen Filterregeneration zunächst eine Katalysatortemperaturanstiegssteuerung und danach eine Filtertemperaturanstiegssteuerung vornimmt. Weiter sind hier auch vor dem Oxidationskatalysator ein weiterer, vorderer Oxidationskatalysator und eine Umleitung um diesen vorderen Oxidationskatalysator vorgesehen. Bei der Ausführung der Katalysatortemperaturanstiegssteuerung wird das Abgas dabei über den vorderen Oxidationskatalysator geleitet, während bei der Filtertemperaturanstiegssteuerung das Abgas über die Umleitung geleitet wird.

Es ist Aufgabe der vorliegenden Erfindung, ein Verfahren und eine Vorrichtung zur Regeneration eines im Abgasstrang einer Brennkraftmaschine angeordneten Partikelfilters zur Verfügung zu stellen, mittels dem bzw. mittels der auf baulich einfache Weise eine funktionssichere und zuverlässige Partikelfilter-Regeneration möglich wird.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 9. Vorteilhafte Ausgestaltungen hierzu sind jeweils Gegenstand der darauf rückbezogenen Unteransprüche.

Erfingdungsgemäß wird vorgeschlagen, im Regenerationsbetrieb vom Rohabgasstrom stromauf einer Abgasturbine eines Abgasturboladers eine vorgegebene Menge eines zu erhitzenden Abgasstroms abzuzweigen, wozu von einer den Abgasstrom zur Abgasturbine führenden Zuführleitung eine Zweigleitung abzweigt. Der zu erhitzende Abgasstrom wird dann in der Zweigleitung mittels einer Heizeinrichtung, vorzugsweise mittels wenigstens eines Heizkatalysators, erhitzt, wobei dieser erhitzte Abgasstrom dann anschließend als heißer Abgasstrom stromauf des wenigstens einen Partikelfilters wieder mit dem von der Abgasturbine kommenden und demgegenüber eine niedrigere Temperatur aufweisenden Restabgasstrom vermischt wird. Dazu wird die Zweigleitung mit einer von der Abgasturbine wegführenden und zum Partikelfilter hinführenden Abgasleitung zusammengeführt bzw. mündet diese dort ein.

Der Restabgasstrom, ebenso wie der vermischte, heiße Gemischstrom, braucht dadurch stromauf des Partikelfilters keinen NO-Oxidationskatalysator durchströmen, da sich der Abgasstrom durch die Entnahme des zu erhitzenden Abgasstroms stromauf der Abgasturbine auf einem deutlich höheren Temperaturniveau befindet als stromab der Abgasturbine. Dadurch ist eine besonders effektive Aufheizung, insbesondere durch Oxidation von zum Beispiel dem zu erhitzenden Abgasstrom zugeführten Kohlenwasserstoffen mittels eines entsprechenden Oxidationskatalysators möglich. Durch die Exothermie dieser Reaktion ist dann nachfolgend auch eine effektive thermische Regeneration der am nachgeschalteten Partikelfilter abgeschiedenen kohlenstoffhaltigen Rußpartikel möglich.

Gemäß einer bevorzugten Ausgestaltung der vorliegenden Erfindungsidee ist somit vorgesehen, dass der heiße Abgasstrom mittels wenigstens eines Heizkatalysators erzeugt wird, der in der Zweigleitung angeordnet ist. Dieser Heizkatalysator ist bevorzugt als Oxidationskatalysator ausgebildet, insbesondere als HC-Oxidationskatalysator. Diesem Oxidationskatalysator werden stromauf desselben Kohlenwasserstoffe zugeführt. Bei den zugeführten Kohlenwasserstoffen handelt es sich vorzugsweise um Kraftstoff aus dem Kraftstoffsystem des Fahrzeugs, das mittels einer Zudosiereinrichtung, beispielsweise über eine Düse oder dergleichen, feinstverteilt bzw. zerstäubt in die Zweigleitung stromauf des Heiz- bzw. Oxidationskatalysators zu vorgegebenen Zeiten in einer vorgegebenen Menge zugedüst wird. Ein derartiger Heiz- bzw. Oxidationskatalysator weist eine solche Aktivkomponente auf, die mit vorgegebenen Bestandteilen eines Abgasstroms, das heißt im vorliegenden Beispielfall mit den Kohlenwasserstoffen durch exotherme Reaktion einen erhitzten Abgasstrom erzeugt. Besonders geeignet sind für einen HC-Oxidationskatalysator die Elemente der Platinmetallgruppe und/oder Vanadium und/oder Wolfram und/oder Cer als Aktivkomponente. Diese Aktivkomponenten können sowohl einzeln als auch in Kombination untereinander eingesetzt bzw. verwendet werden.

Mit dieser bevorzugten Ausgestaltung kann somit stromauf des wenigstens einen Partikelfilters ein zu erhitzender Abgasteilstrom vor einer Abgasturbine abgezweigt werden, wobei in den abgezweigten Teilstrom dann anschließend Kohlenwasserstoffe zugegeben werden, die dann mittels eines HC-Oxidationskatalysators katalytisch oxidiert werden, um anschließend den so erhitzten Abgasteilstrom stromauf des wenigstens einen Partikelfilters wieder dem von der Abgasturbine kommenden Restabgasstrom zuzuführen. Dabei wird die konkret über eine Zweigleitung abgezweigte Abgasmenge im Regenerationsbetrieb bevorzugt mit Hilfe einer elektronischen Steuer- und/oder Regeleinrichtung entsprechend vorgegebener Betriebs- und/oder Regenerationsparameter so vorgegeben, dass zu vorgegebenen Zeiten eine vorgegebene Abgasmenge abgezweigt wird. Konkret kann dabei die Steuer- und/oder Regeleinrichtung wenigstens eine Drossel- und/oder Absperreinrichtung ansteuern, die beispielsweise durch eine Drossel- und/oder Absperrklappe oder ein Drossel- und/oder Absperrventil gebildet ist. Alternativ oder zusätzlich dazu kann die abzuzweigende Abgasmenge aber auch mittels einer Abgasturbine mit variabler Turbinengeometrie vorgegeben bzw. eingestellt werden. Weiter kann wenigstens eines der vorgesehenen Drossel- und/oder Absperreinrichtungen gleichzeitig auch als Waste-Gate ausgebildet sein und fungieren.

Die Drossel- und/oder Absperreinrichtung sind bevorzugt im Restabgasstrom nach der Abgasturbine und vor der Mündungsstelle der Zweigleitung in die von der Abgasturbine kommende Abgasleitung und/oder im abgezweigten Abgasstrom stromauf des Heizkatalysators angeordnet.

Mit einem derartigen Aufbau kann zum Beispiel gemäß einer besonders bevorzugten Verfahrensführung vorgesehen werden, dass die im Nicht-regenerationsbetrieb über die Zuführleitung abgezweigte Abgasmenge auf einen vorgegebenen Wert minimiert wird, insbesondere auch jeglicher Abgasstrom über die Zuführleitung im Wesentlichen verhindert wird. Dadurch wird eine Bildung von NO₂ und SO₃ durch Oxidation von NO und SO₂ am bevorzugt als HC-Oxidationskatalysator ausgebildeten Heizkatalysator vermieden bzw. verringert. Diese Absperrmöglichkeit ist weiter auch deshalb von Vorteil, da sich durch diese Abzweigung der Wirkungsgrad der Abgasturbine verschlechtert.

Zum Zünden der zudosierten Kohlenwasserstoffe wird der zu erhitzende Abgasstrom über die bevorzugt als HC-Oxidationskatalysator ausgebildete Heizeinrichtung geführt, wodurch der Abgasstrom erhitzt wird. Die dadurch zu erzielende Heizleistung ist allerdings durch die vorhandene Sauerstoffmenge limitiert. Denn für den Fall, dass der Lambdawert den Wert 1 erreichen sollte, ist keine Oxidation der Kohlenwasserstoffe mehr möglich. Um dies zu vermeiden, wird vorgeschlagen, dem zu erhitzenden Abgasstrom, nach Erreichen einer bestimmten vorgegebenen Temperatur und/oder nach Unterschreiten bzw. Erreichen eines vorgegebenen Lambdawertes, Frischluft zuzuführen. Diese optionale Frischluftzuführung bewirkt ein Anheben des Lambdawertes und damit auch eine Anhebung der Heizleistung. Die Frischluft kann dabei generell ladeluftseitig abgezweigt werden, konkret zum Beispiel auch stromab einer Einmündung einer Abgasrückführleitung in eine Ladeluftleitung.

Durch die Zugabe von zum Beispiel von Kohlenwasserstoffen bzw. in dessen Folge, durch deren Oxidation am HC-Oxidationskatalysator, kann der Restsauerstoffgehalt somit im zu erhitzenden bzw. erhitzten Abgasstrom sehr stark abnehmen, so dass gegebenenfalls keine vollständige Oxidation der Kohlenwasserstoffe mehr gelingt. Um dies zu verhindern, kann der Restabgasstrom stromab und/oder stromauf der Abgasturbine, aber stromauf der Zusammenführung der zu mischenden Abgasströme zum Beispiel gedrosselt werden, wodurch dann wieder mehr Abgas und damit mehr Sauerstoff über die Zweigleitung geleitet wird. Dazu kann im Bereich der Zweigleitung stromab und/oder stromauf des Heizkatalysators ein Sauerstoffsensor vorgesehen sein, mittels dem die Sauerstoffkonzentration im Abgasstrom erfasst werden kann. Ebenso kann dort aber auch wenigstens ein Temperatursensor vorgesehen sein.

Der Heizkatalysator kann grundsätzlich auch außerhalb des Abgasstrangs angeordnet sein, was gegebenenfalls jedoch zu einer raschen Auskühlung dieses Heizkatalysators führen kann. Gemäß einer bevorzugten Ausgestaltung ist daher vorgesehen, den Heizkatalysator so im Abgasstrang anzuordnen, dass dieser von wenigstens einem Abgasstrom wenigstens bereichsweise umströmt wird. In diesem Fall sind dann die einzelnen Abgasströme strömungstechnisch entkoppelt.

Um zum Beispiel im Falle von Kohlenwasserstoffen als Oxidationsmittel hohe Kohlenwasserstoffkonzentrationen stromab des Partikelfilters zu vermeiden, kann dieser mit einer katalytisch aktiven Beschichtung zur Oxidation von Kohlenwasserstoffen versehen werden. Auch ein stromab und/oder stromauf des Partikelfilters, nach der Zusammenführungs- bzw. Mündungsstelle, angebrachter Katalysator mit Kohlenwasserstoffoxidationsaktivität ist denkbar. Um unnötig hohe NO₂- und SO₃-Emissionen zu vermeiden, ist die Beladung dieser zusätzlichen Katalysatoren mit Aktivkomponenten und/oder deren Volumen im Vergleich zu dem wenigstens einen in der Zweigleitung angeordneten Heizkatalysator geringer.

Das gesamte System kann mit weiteren Katalysatoren zur NO_{X}-Reduktion, wie beispielsweise NO_{X}-Speicherkatalysatoren und/oder SCR-Katalysatoren, kombiniert werden, die bevorzugt stromab des Partikelfilters im Abgasstrang vorgesehen bzw. angeordnet sein können. Für die NO_{X}-Speicherkatalysatoren werden Platin und/oder Barium und/oder Calcium als Aktivkomponenten bevorzugt. Demgegenüber ist für die SCR-Katalysatoren der Einsatz von wolframoxidstabilisiertem Vanadiumpentoxid auf Titandioxidbasis oder Eisen-Zeolithe oder Kupfer-Zeolithe oder Kobalt-Zeolithe sinnvoll.

Grundsätzlich kann die Aktivität sämtlicher Katalysatoren durch den Einsatz von Zeolithen erhöht werden.

Grundsätzlich kann der wenigstens eine bevorzugt als HC-Oxidationskatalysator ausgebildete Heizkatalysator auch zusätzlich mit einer NO-Oxidationsaktivität versehen sein, wodurch die NO₂-Anteile im Nicht-Regenerationsbetrieb angehoben werden, so dass in vorgegebenen Grenzen zusätzlich eine grundsätzlich Regenerationsmöglichkeit des Partikelfilters mit Hilfe von NO₂ ermöglicht wird. Die hier gegebenenfalls gebildeten NO₂-Mengen sind jedoch deutlich geringer als dies beim Einsatz von dem Partikelfilter vorgeschalteten NO-Oxidationskatalysatoren der Fall wäre. Allerdings ist dann in diesem Zusammenhang weiter darauf zu achten, dass der HC-Oxidationskatalysator thermisch stabil ausgeführt sein muss als ein reiner NO-Oxidationskatalysator. Dies hat wiederum üblicherweise eine geringere NO-Oxidationsaktivität im Vergleich zu reinen NO-Oxidationskatalysatoren zur Folge, so dass auch aus diesem Grunde die NO-Menge reduziert bleibt.

Weiter kann auch der wenigstens eine Partikelfilter zusätzlich mit einer NO-Oxidationsaktivität versehen sein.

Die Erfindung wird nachfolgend anhand einer Zeichnung näher erläutert.

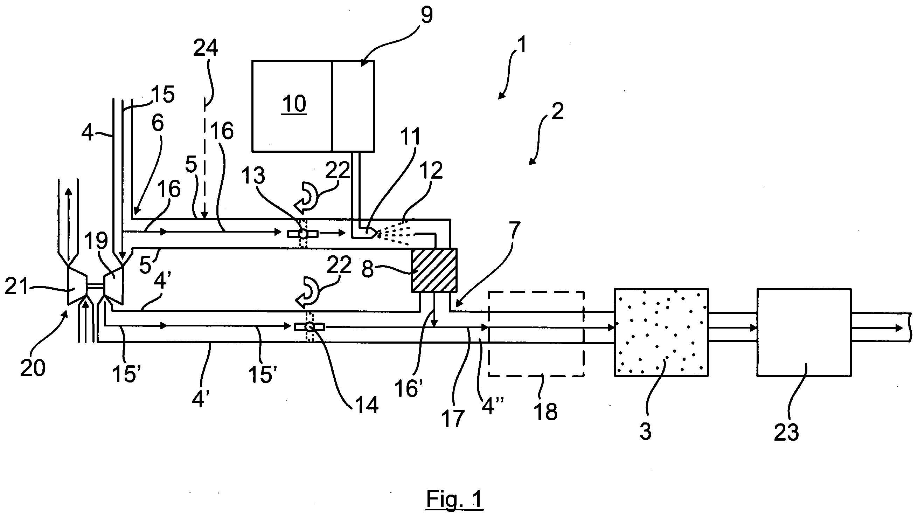

Die einzige Figur 1 zeigt schematisch und lediglich beispielhaft eine mögliche Ausführungsform einer erfindungsgemäßen Regenerationsvorrichtung 1 für einen im Abgasstrang 2 einer hier nicht dargestellten Brennkraftmaschine angeordneten Partikelfilter 3.

Konkret weist der Abgasstrang 2 hier eine Zuführleitung 4 auf, mittels der ein von der Brennkraftmaschine kommender Rohabgasstrom bzw. Abgasstrom 15 zu einer Abgasturbine 19 eines zusätzlich noch einen Verdichter 21 aufweisenden Abgasturboladers 20 geführt wird. Von dieser Zuführleitung 4 zweigt stromauf der Abgasturbine 19 eine Zweigleitung 5 an einer Abzweigstelle 6 ab, wobei diese Zweigleitung 5 stromauf des Partikelfilters 3 an einer Mündungsstelle 7 mit einer von der Abgasturbine 19 kommenden Abgasleitung 4' zusammengeführt wird, um eine zum Partikelfilter 3 führende Gemischleitung 4" auszubilden.

In der Zweigleitung 5 ist ein HC-Oxidationskatalysator 8 angeordnet.

Ferner umfasst die Regenerationsvorrichtung 1 eine Zudosiervorrichtung 9 für Kraftstoff, die, wie dies äußerst schematisch dargestellt ist, mit einer Steuer- und/oder Regeleinrichtung 10 gekoppelt ist. Die Zudosiervorrichtung 9 weist eine in die Zweigleitung 5 einragende Einspritzdüse 11 auf, über die der Kraftstoff 12 während des Regenerationsbetriebes gesteuert bzw. geregelt mit der Steuer- und/oder Regeleinrichtung 10 zu vorgegebenen Zeiten in vorgegebenen Mengen in die Zweigleitung 5 stromauf des HC-Oxidationskatalysators 8 eingedüst wird.

Wie dies der Fig. 1 weiter entnommen werden kann, ist stromauf des HC-Oxidationskatalysators 8 im Bereich der Zweigleitung 5 ferner eine Drosselklappe 13 angeordnet, die ebenfalls mit einer Steuer- und/oder Regeleinrichtung 10 gekoppelt ist. Ferner ist in der Abgasleitung 4' im Bereich zwischen der Abgasturbine 19 und der Mündungsstelle 7 ebenfalls eine Drosselklappe 14 angeordnet, die ebenfalls mit der Steuer- und/oder Regeleinrichtung 10 gekoppelt ist.

Je nach der Stellung der beiden Drosselklappen 13, 14 kann die von dem von der Brennkraftmaschine kommenden Abgasstrom 15 in die Zweigleitung 5 abgezweigte Menge und Masse eines zu erhitzenden Abgasstroms 16 gesteuert vorgegeben bzw. geregelt werden. In der Fig. 1 ist mit durchzogenen Linien die Offenstellung der Drosselklappen 13, 14 und punktiert die Geschlossenstellung der Drosselklappen 13, 14 dargestellt. Die Pfeile 22 stellen hier schematisch die variable Verstellmöglichkeit der Drosselklappen 13, 14 dar.

Der zu erhitzende Abgasstrom 16 nimmt entlang seines Strömungsweges stromauf des HC-Oxidationskatalysators 8 den eingedüsten Kraftstoff bzw. die eingedüsten Kohlenwasserstoffe auf und durchströmt kraftstoffangereichert den HC-Oxidationskatalysator 8, in dem dann eine exotherme Reaktion bzw. Oxidation stattfindet, aufgrund der der Abgasstrom 16 auf eine vorgegebene Temperatur erhitzt wird.

Dieser erhitzte Abgasstrom 16' wird dann stromab des HC-Oxidationskatalysators 8 an der Mündungsstelle 7 dem von der Abgasturbine kommenden Restabgasstrom 15' zugeführt, wo sich die beiden Abgasströme 15', 16' vermischen, so dass anschließend, nach dem Vermischen der beiden Abgasströme 15', 16', ein heißer Gemischstrom 17 zum Partikelfilter 3 strömt, wo die im Partikelfilter 3 eingelagerten kohlenstoffhaltigen Rußpartikel zu CO, CO₂, N₂ und NO umgesetzt werden, wodurch der Partikelfilter 3 regeneriert wird.

Im Nicht-Regenerationsbetrieb wird die Drosselklappe 13 so angesteuert, dass diese die Zweigleitung 5 im Wesentlichen vollständig verschließt, so dass kein bzw. nahezu kein Abgasstrom über die Zweigleitung 5 zum Partikelfilter 3 gelangt und der Wirkungsgrad der Ladegruppe nicht verschlechtert wird. In diesem Fall ist dann die Drosselklappe 14 vollständig geöffnet.

Im Regenerationsbetrieb dagegen ist die Drosselklappe 13 und auch die Drosselklappe 14 so weit geöffnet, dass eine vorgegebene Abgasmenge vom Abgasstrom 15 abgezweigt wird und in der bereits zuvor bereits beschriebenen Weise ein heißer Gemischstrom 17 erzeugt wird, der dann dem Partikelfilter 3 zu dessen Regeneration zugeführt wird.

Für den Fall, dass zum Beispiel durch die Zugabe des Kraftstoffes 12 in der Zweigleitung 5 der Restsauerstoffgehalt im Abgasstrom 16 zu stark abnehmen sollte und damit keine vollständige Oxidation der Kohlenwasserstoffe am HC-Oxidationskatalysator 8 erfolgt, kann die Drosselklappe 14 mehr oder weniger geschlossen und die Drosselklappe 13 geöffnet werden, wodurch der Abgasstrom 15' durch die Restabgasleitung 4' stark gedrosselt wird, so dass eine größere Abgasmenge über die Zweigleitung 5 und damit über den HC-Oxidationskatalysator 8 zum Partikelfilter 3 strömt. Ebenso kann, wie dies durch die strichliert eingezeichnete Frischluftleitung 24 symbolisiert ist, während des Regenerationsbetriebes ein ladeluftseitiger Frischluftstrom in den zu erhitzenden Abgasstrom 16 eingemischt werden, um die Heizleistung, durch eine angehobene Sauerstoffmenge zur Oxidation einer weiter erhöhten Kohlenwasserstoffmenge, zu vorgegebenen Zeiten bzw. bei Erreichen vorgegebener Abgasstromtemperaturen nochmals weiter zu erhöhen.

Die zu erhitzende Abgasmenge 16 kann auch durch die Verwendung einer variablen Turbinengeometrie (VTG) verändert werden, da durch deren Verstellung der Abgasgegendruck stromauf der Abgasturbine 19 variiert werden kann.

Im vorliegenden Beispielfall ist dem Partikelfilter 3 noch ein NO_{X}-Reduktionskatalysator 23, zum Beispiel ein SCR-Katalysator, nachgeschaltet.

Des Weiteren kann, wie dies in der Fig. 1 lediglich strichliert eingezeichnet ist, stromab der Mündungsstelle 7 und stromauf des Partikelfilters 3 auch ein weiterer HC-Oxidationskatalysator 18 vorgesehen sein, mittels dem hohe Kohlenwasserstoffkonzentrationen stromab des Partikelfilters 3 zuverlässig vermieden werden können. Alternativ oder zusätzlich hierzu ist es auch möglich, den Partikelfilter 3 selbst mit einer entsprechenden Aktivkomponente zu versehen.

Weiter kann die Drosselklappe 13 hier zudem in einer vorteilhaften Doppelfunktion auch als Waste-Gate fungieren.

## Patentansprüche

1. Verfahren zur Regeneration eines im Abgasstrang einer Brennkraftmaschine angeordneten Partikelfilters, insbesondere eines Dieselpartikelfilters, wobei dem wenigstens einen Partikelfilter ein zu reinigender Abgasstrom zugeführt wird, **dadurch gekennzeichnet, dass** wenigstens im Regenerationsbetrieb vom Abgasstrom (15) stromauf einer Abgasturbine (19) eines Abgasturboladers (20) eine vorgegebene Menge eines zu erhitzenden Abgasstroms (16) abgezweigt wird, die nach dem Erhitzen mittels einer Heizeinrichtung (8) als heißer Abgasstrom (16') dem von der Abgasturbine (19) kommenden und demgegenüber eine niedrigere Temperatur aufweisenden Restabgasstrom (15') stromauf des wenigstens einen Partikelfilters (3) beigemischt wird.

2. Verfahren nach Anspruch 1, **dadurch gekennzeichnet, dass** der Restabgasstrom (15') stromab der Abgasturbine (19) und stromauf der Zuführung des heißen Abgasstroms (16') sowie der vermischte, heiße Gemischstrom (17) stromab der Zuführung des heißen Abgasstromes (16') bis zum wenigstens einen Partikelfilter (3), keinen NO-Oxidationskatalysator durchströmt.

3. Verfahren nach Anspruch 1 oder 2, **dadurch gekennzeichnet, dass** der heiße Abgasstrom (16') mittels wenigstens eines Heizkatalysators als Heizeinrichtung (8) erzeugt wird, der wenigstens eine solche Aktivkomponente aufweist, die mit vorgegebenen Bestandteilen eines Abgasstroms eine exotherme Reaktion und damit eine Erhitzung des Abgasstroms (16') erzeugt.

4. Verfahren nach Anspruch 3, **dadurch gekennzeichnet, dass** der Heizkatalysator (8) als Oxidationskatalysator, bevorzugt als HC-Oxidationskatalysator ausgebildet ist, der von einem mit Kohlenwasserstoff (12) beladenen, zu erhitzenden Abgasstrom (16) durchströmt wird dergestalt, dass der Abgasstrom (16) durch exotherme Reaktion der Kohlenwasserstoffe (12) im Oxidationskatalysator erhitzt wird, wobei bevorzugt vorgesehen ist, dass die Kohlenwasserstoffe (12) dem zu erhitzenden Abgasstrom (16) stromauf des Heizkatalysators (8) zu vorgegebenen Zeiten in vorgegebenen Mengen mittels einer Zudosiervorrichtung (9) elektronisch gesteuert oder geregelt zudosiert werden.

5. Verfahren nach einem der Ansprüche 1 bis 4, **dadurch gekennzeichnet, dass** eine Steuer- und/oder Regeleinrichtung (10) vorgesehen ist, mittels der wenigstens eine im Restabgasstrom (15') stromab der Abgasturbine (19) und/oder im zu erhitzenden Abgasstrom (16) angeordnete Drossel- und/oder Absperreinrichtung (13, 14) so angesteuert wird, dass in Abhängigkeit von vorgegebenen Betriebs- und/oder Regenerationsparametern zu vorgegebenen Zeiten eine vorgegebene Abgasmenge vom Restabgasstrom (15) stromauf der Abgasturbine (19) abgezweigt wird.

6. Verfahren nach Anspruch 5, **dadurch gekennzeichnet, dass** wenigstens eine im abgezweigten zu erhitzenden Abgasstrom (16) angeordnete Drossel- und/oder Absperreinrichtung (13) durch entsprechende Ansteuerung mittels der Steuer- und/oder Regeleinrichtung (10) gleichzeitig als Waste-Gate fungiert, und/oder dass die Drossel- und/oder Absperreinrichtung (13) im Nicht-Regenerationsbetrieb das Abzweigen eines Abgasstroms im Wesentlichen verhindert oder auf einen vorgegebenen Minimalwert reduziert.

7. Verfahren nach einem der Ansprüche 1 bis 6, **dadurch gekennzeichnet, dass** dem zu erhitzenden Abgasstrom (16) nach Erreichen einer vorgegebenen Aufheiztemperatur, gemessen am heißen Abgasstrom (16), und/oder eines vorgegebenen Lambdawertes ein Frischluftstrom zugeführt wird.

8. Verfahren nach einem der Ansprüche 4 bis 7, **dadurch gekennzeichnet, dass** die Steuer- und/oder Regeleinrichtung (10) im Falle eines Absinkens des Sauerstoffgehaltes des abgezweigten, zu erhitzenden Abgasstromes (16) im Regenerationsbetrieb unter einen vorgegebenen Sauerstoffgrenzwert, den Restabgasstrom (15') stromab der Abzweigstelle (6), aber stromauf der Zusammenführung des erhitzten Abgasstroms (16') mit dem Restabgasstrom (15') mittels, wenigstens einer Drossel- und/oder Absperreinrichtung (14) so sperrt oder drosselt, dass eine in Abhängigkeit vom Sauerstoffgehalt des Abgasstromes (15) vorgegebene Abgasmenge vom Abgasstrom (15) stromauf der Abgasturbine (19) abgezweigt und stromauf der Mündungsstelle (7) der wenigstens einen zur Erhitzung des abgezweigten, zu erhitzenden Abgasstromes (16) vorgesehenen Heizeinrichtung (8) zugeführt wird.

9. Vorrichtung zur Regeneration eines im Abgasstrang einer Brennkraftmaschine angeordneten Partikelfilters, insbesondere eines Dieselpartikelfilters, insbesondere zur Durchführung eines Verfahrens nach einem der vorgenannten Verfahrensansprüche, mit wenigstens einem von einem zu reinigenden Abgasstrom durchströmten Partikelfilter, **dadurch gekennzeichnet, dass** von einer den Abgasstrom (15) zu einer Abgasturbine (19) eines Abgasturboladers (20) führenden Zuführleitung (4) eine Zweigleitung (5) abzweigt, die mit wenigstens einer Heizeinrichtung (8) gekoppelt ist und die stromauf des wenigstens einen Partikelfilters (3) mit einer von der Abgasturbine (19) zum wenigstens einen Partikelfilter (3) geführten Abgasleitung (4') zusammengeführt ist oder in diese einmündet.

10. Vorrichtung nach Anspruch 9, **dadurch gekennzeichnet, dass** in der von der Abgasturbine (19) zum wenigstens einen Partikelfilter (3) geführten Abgasleitung (4') und in der von der Zusammenführung der Zweigleitung (5) mit dieser Abgasleitung (4') bis zum wenigstens einen Partikelfilter (3) geführten Gemischleitung (4") kein NO-Oxidationskatalysator angeordnet ist.

11. Vorrichtung nach Anspruch 9 oder 10, **dadurch gekennzeichnet, dass** in der Zweigleitung (5) wenigstens ein Heizkatalysator als Heizeinrichtung (8) angeordnet ist, wobei der Heizkatalysator (8) bevorzugt als Oxidationskatalysator ausgebildet ist, und wobei bevorzugt eine Zudosiervorrichtung (9) vorgesehen ist, mittels der dem zu erhitzenden Abgasstrom (16) stromauf des wenigstens einen Heizkatalysators (8) Kohlenwasserstoffe (12) oder dergleichen für eine exotherme Reaktion zudosierbar ist.

12. Vorrichtung nach einem der Ansprüche 9 bis 11, **dadurch gekennzeichnet, dass** in der Abgasleitung (4') stromab und/oder stromauf der Abgasturbine (19) und stromauf der Zusammenführung der Zweigleitung (5) mit der Abgasleitung (4') und/oder in der Zweigleitung (5) vor der wenigstens einen Heizeinrichtung (8) wenigstens eine mittels einer Steuer- und/oder Regeleinrichtung (10) ansteuerbare Drossel- und/oder Absperreinrichtung (13, 14) angeordnet ist, mittels dem die vom Abgasstrom (15) abzuzweigende Abgasmenge einstellbar ist.

13. Vorrichtung nach einem der Ansprüche 9 bis 12, **dadurch gekennzeichnet, dass** die Zweigleitung (5) mit einer mittels eines Absperrvorganges absperrbaren Frischluftleitung (24) strömungstechnisch gekoppelt ist, mit der der Zweigleitung (5) ein ladeluftseitiger Frischluftstrom oder ein stromab der Einmündung einer Abgasrückführleitung in eine Ladeluftleitung abgezweigter Ladeluftstrom zuführbar ist.

14. Vorrichtung nach einem der Ansprüche 11 bis 13, **dadurch gekennzeichnet, dass** im Bereich der Zweigleitung (5) stromab und/oder stromauf des Heizkatalysators (8) ein Sauerstoffsensor zur Erfassung der O₂-Konzentration im Abgasstrom und/oder ein Temperatursensor zur Erfassung der Temperatur im Abgasstrom vorgesehen ist.

15. Vorrichtung nach einem der Ansprüche 9 bis 14, **dadurch gekennzeichnet, dass** stromab der Zusammenführung der Abgasleitung (4') und der Zweigleitung (5) sowie stromauf und/oder stromab des Partikelfilters (3) wenigstens ein Oxidationskatalysator (18), insbesondere ein Oxidationskatalysator zur Oxidation von Kohlenwasserstoffen in der Gemischleitung (4") angeordnet ist, wobei bevorzugt vorgesehen ist, dass der stromab der Zusammenführung angeordnete, wenigstens eine Oxidationskatalysator (18) als HC-Oxidationskatalysator ausgebildet ist, der einen niedrigeren Gehalt an Kohlenwasserstoffe oxidierender Aktivkomponente(n) und/oder ein geringeres Volumen aufweist als ein ebenfalls als HC-Oxidationskatalysator ausgebildeter Heizkatalsysator (8) in der Zweigleitung.

## Claims

1. Method for regenerating a particulate filter built into the exhaust gas line of an internal combustion engine, in particular a diesel particulate filter, wherein an exhaust gas flow which is to be cleaned is fed to the at least one particulate filter, **characterized in that**, at least during the regeneration mode, a predefined quantity of an exhaust gas flow (16) which is to be heated is branched off from the exhaust gas flow (15) upstream of an exhaust gas turbine (19) of an exhaust gas turbocharger (20), said predefined quantity, after heating by means of a heating device (8), is admixed as a hot exhaust gas flow (16') to the residual exhaust gas flow (15'), which comes from the exhaust gas turbine (19) and by contrast has a lower temperature, upstream of the at least one particulate filter (3).

2. Method according to Claim 1, **characterized in that** the residual exhaust gas flow (15') downstream of the exhaust gas turbine (19) and upstream of the feeding-in of the hot exhaust gas flow (16'), and also the mixed hot mixture flow (17) downstream of the feeding-in of the hot exhaust gas flow (16') as far as the at least one particulate filter (3) do not pass through any NO oxidation catalytic converter.

3. Method according to Claim 1 or 2, **characterized in that** the hot exhaust gas flow (16') is generated by means of at least one heating catalytic converter as a heating device (8) which has at least one such active component which generates an exothermal reaction, and therefore heating of the exhaust gas flow (16') with predefined components of an exhaust gas flow.

4. Method according to Claim 3, **characterized in that** the heating catalytic converter (8) is embodied as an oxidation catalytic converter, preferably as an HC oxidation catalytic converter, through which an exhaust gas flow (16) which is loaded with hydrocarbon (12) and is to be heated passes, in such a way that the exhaust gas flow (16) is heated by an exothermal reaction of the hydrocarbons (12) in the oxidation catalytic converter, wherein the hydrocarbons (12) are preferably metered in an electronically open-loop or closed-loop controlled fashion to the exhaust gas flow (16), which is to be heated, upstream of the heating catalytic converter (8) at predefined times in predefined quantities by means of a metering device (9).

5. Method according to one of Claims 1 to 4, **characterized in that** an open-loop and/or closed-loop control device (10) is provided, by means of which at least one throttle device and/or shut-off device (13, 14) arranged in the residual exhaust gas flow (15') downstream of the exhaust gas turbine (19) and/or in the exhaust gas flow (16) to be heated, is activated in such a way that a predefined quantity of exhaust gas is branched off from the residual exhaust gas flow (15) upstream of the exhaust gas turbine (19) depending on predefined operating and/or regeneration parameters at predefined times.

6. Method according to Claim 5, **characterized in that** at least one throttle device and/or shut-off device (13) arranged in the branched-off exhaust gas flow (16) to be heated acts at the same time as a waste gate, by corresponding activation by means of the open-loop and/or closed-loop control device (10), and/or **in that** the throttle device and/or shut-off device (13) in the non-regeneration mode substantially prevents the branching-off of an exhaust gas flow, or at least reduces it to a predefined minimum value.

7. Method according to one of Claims 1 to 6, **characterized in that**, after a predefined heating temperature has been reached, as measured at the hot exhaust gas flow (16), and/or a predefined lambda value has been reached, a fresh air flow is fed to the exhaust gas flow (16) which is to be heated.

8. Method according to one of Claims 4 to 7, **characterized in that**, in the event of the oxygen content of the branched-off exhaust gas flow (16), which is to be heated, dropping below a predefined oxygen limit value in the regeneration mode, the open-loop and/or closed-loop control device (10) shuts off or throttles the residual exhaust gas flow (15') downstream of the branching point (6), but upstream of the convergence of the heated exhaust gas flow (16') with the residual exhaust gas flow (15') by means of at least one throttle device and/or shut-off device (14) in such a way that a quantity of exhaust gas which is predefined depending on the oxygen content of the exhaust gas flow (15) is branched off from the exhaust gas flow (15) upstream of the exhaust gas turbine (19) and is fed, upstream of the junction point (7), to the at least one heating device (8) which is provided for heating the branched-off exhaust gas flow (16) which is to be heated.

9. Device for regenerating a particulate filter built into the exhaust gas line of an internal combustion engine, in particular a diesel particulate filter, in particular for carrying out a method according to one of the preceding method claims, having at least one particulate filter, through which an exhaust gas flow which is to be cleaned passes, **characterized in that** a branch line (5) branches off from a feed line (4) conducting the exhaust gas flow (15) to an exhaust gas turbine (19) of an exhaust gas turbocharger (20), said branch line being coupled to at least one heating device (8) and, upstream of the at least one particulate filter (3), being converged with an exhaust gas line (4'), which is guided from the exhaust gas turbine (19) to the at least one particulate filter (3), or opening into said exhaust gas line.

10. Device according to Claim 9, **characterized in that** no NO oxidation catalytic converter is arranged in the exhaust gas line (4') guided from the exhaust gas turbine (19) to the at least one particulate filter (3) and in the mixture line (4") which is guided from the convergence of the branch line (5) with said exhaust gas line (4') as far as the at least one particulate filter (3).

11. Device according to Claim 9 or 10, **characterized in that** at least one heating catalytic converter as the heating device (8) is arranged in the branch line (5), wherein the heating catalytic converter (8) is preferably embodied as an oxidation catalytic converter, and wherein preferably a metering device (9) is provided, by means of which hydrocarbons (12) or the like for an exothermal reaction can be metered to the exhaust gas flow (16), which is to be heated, upstream of the at least one heating catalytic converter (8).

12. Device according to one of Claims 9 to 11, **characterized in that** at least one throttle device and/or shut-off device (13, 14) which is activateable by means of an open-loop and/or closed-loop control device (10) and by means of which the exhaust gas quantity to be branched off from the exhaust gas flow (15) can be adjusted is arranged in the exhaust gas line (4') downstream and/or upstream of the exhaust gas turbine (19) and upstream of the convergence of the branch line (5) with the exhaust gas line (4') and/or in the branch line (5) before the at least one heating device (8).

13. Device according to one of Claims 9 to 12, **characterized in that** the branch line (5) is coupled in terms of flow to a fresh air line (24) which can be shut off by means of a shut-off operation and with which a charge-air-side fresh air flow or a charge air flow branched off downstream of the junction of an exhaust gas feedback line into a charge air line can be fed to the branch line (5).

14. Device according to one of Claims 11 to 13, **characterized in that** in the region of the branch line (5) downstream and/or upstream of the heating catalytic converter (8) an oxygen sensor is provided for detecting the O₂ concentration in the exhaust gas flow, and/or a temperature sensor is provided for detecting the temperature in the exhaust gas flow.

15. Device according to one of Claims 9 to 14, **characterized in that** at least one oxidation catalytic converter (18), in particular an oxidation catalytic converter for oxidizing hydrocarbons in the mixture line (4") is arranged downstream of the convergence of the exhaust gas line (4') and of the branch line (5) and upstream and/or downstream of the particulate filter (3), wherein it is preferably provided that the at least one oxidation catalytic converter (18) which is arranged downstream of the convergence is embodied as an HC oxidation catalytic converter which has a lower content of active component (components) which oxidizes (oxidize) hydrocarbons and/or a smaller volume than a heating catalytic converter (8), also embodied as an HC oxidation catalytic converter, in the branch line.

## Revendications

1. Procédé pour la régénération d'un filtre à particules disposé dans une ligne d'échappement d'un moteur à combustion interne, en particulier d'un filtre à particules diesel, ledit au moins un filtre à particules étant alimenté en un flux de gaz d'échappement à purifier, **caractérisé en ce qu'**au moins dans le fonctionnement de régénération, une quantité prédéfinie d'un flux (16) de gaz d'échappement à chauffer est dérivée du flux (15) de gaz d'échappement en amont d'une turbine (19) à gaz d'échappement d'un turbocompresseur (20) à gaz d'échappement, qui est mélangée en aval dudit au moins un filtre à particules (3) après le chauffage au moyen d'un dispositif de chauffage (8), en tant que flux (16') de gaz d'échappement chaud, au flux (15') résiduel de gaz d'échappement provenant de la turbine (19) à gaz d'échappement et présentant une température inférieure à la température de celui-ci.

2. Procédé selon la revendication 1, **caractérisé en ce que** le flux (15') résiduel de gaz d'échappement, en aval de la turbine (19) à gaz d'échappement et en amont de l'introduction du flux (16') de gaz d'échappement chaud, ainsi que le flux mixte (17) mélangé, chaud en aval de l'introduction du flux (16') de gaz d'échappement chaud jusqu'au moins un filtre à particules (3), ne s'écoulent pas à travers un catalyseur d'oxydation de NO.

3. Procédé selon la revendication 1 ou 2, **caractérisé en ce que** le flux (16') de gaz d'échappement chaud est produit au moyen d'au moins un catalyseur chauffant en tant que dispositif de chauffage (8), qui présente au moins un composant actif qui produit, avec les constituants prédéfinis d'un flux de gaz d'échappement, une réaction exothermique et donc un chauffage du flux (16') de gaz d'échappement.

4. Procédé selon la revendication 3, **caractérisé en ce que** le catalyseur chauffant (8) est conçu comme catalyseur d'oxydation, de préférence comme catalyseur d'oxydation de HC, qui est traversé par un flux (16) de gaz d'échappement chargé d'hydrocarbures (12) à chauffer de manière telle que le flux (16) de gaz d'échappement est chauffé par réaction exothermique des hydrocarbures (12) dans le catalyseur d'oxydation, où il est de préférence prévu que les hydrocarbures (12) soient dosés de manière commandée ou régulée par voie électronique au moyen d'un dispositif de dosage (9) dans le flux (16) de gaz d'échappement à chauffer en amont du catalyseur chauffant (8) à des moments prédéfinis en des quantités prédéfinies.

5. Procédé selon l'une quelconque des revendications 1 à 4, **caractérisé en ce qu'**un dispositif (10) de commande et/ou de régulation est prévu, au moyen duquel au moins un dispositif (13, 14) d'étranglement et/ou de blocage disposé dans le flux (15') résiduel de gaz d'échappement en aval de la turbine (19) à gaz d'échappement et/ou dans le flux (16) de gaz d'échappement à chauffer est commandé de manière telle qu'une quantité de gaz d'échappement prédéfinie est dérivée du flux (15) résiduel de gaz d'échappement en amont de la turbine (19) à gaz d'échappement en fonction de paramètres de fonctionnement et/ou de régénération prédéfinis.

6. Procédé selon la revendication 5, **caractérisé en ce qu'**au moins un dispositif (13) d'étranglement et/ou de blocage disposé dans le flux (16) de gaz d'échappement dérivé à chauffer fonctionne simultanément comme soupape de décharge par une commande correspondante au moyen du dispositif (10) de commande et/ou de régulation et/ou **en ce que** le dispositif (13) d'étranglement et/ou de blocage empêche sensiblement ou réduit à une valeur minimale prédéfinie la dérivation d'un flux de gaz d'échappement lors du fonctionnement de non-régénération.

7. Procédé selon l'une quelconque des revendications 1 à 6, **caractérisé en ce qu'**un flux d'air frais est introduit dans le flux (16) de gaz d'échappement à chauffer lorsque celui-ci a atteint une température de chauffage prédéfinie, mesurée sur le flux (16) de gaz d'échappement, et/ou une valeur lambda prédéfinie.

8. Procédé selon l'une quelconque des revendications 4 à 7, **caractérisé en ce que** le dispositif (10) de commande et/ou de régulation, dans le cas d'une diminution de la teneur en oxygène du flux (16) de gaz d'échappement dérivé à chauffer, lors du fonctionnement de régénération, sous une valeur limite d'oxygène prédéfinie, bloque ou étrangle le flux (15') résiduel de gaz d'échappement en aval du site de dérivation (6), mais en amont de la réunion du flux (16') de gaz d'échappement chauffé avec le flux (15') résiduel de gaz d'échappement, au moyen d'au moins un dispositif (14) d'étranglement et/ou de blocage de manière telle qu'une quantité de gaz d'échappement prédéfinie en fonction de la teneur en oxygène du flux (15) de gaz d'échappement est dérivée du flux (15) de gaz d'échappement en amont de la turbine (19) à gaz d'échappement et en amont du site (7) d'embouchure dudit au moins un dispositif de chauffage (8) prévu pour le chauffage du flux (16) de gaz d'échappement dérivé à chauffer.

9. Dispositif pour la régénération d'un filtre à particules disposé dans une ligne d'échappement d'un moteur à combustion interne, en particulier d'un filtre à particules diesel, en particulier pour la réalisation d'un procédé selon l'une quelconque des revendications de procédé susmentionnées, présentant au moins un filtre à particules traversé par un flux de gaz d'échappement à purifier, **caractérisé en ce qu'**une conduite de dérivation (5) est dérivée d'une conduite d'alimentation (4) guidant le flux (15) de gaz d'échappement vers une turbine (19) à gaz d'échappement d'un turbocompresseur (20) à gaz d'échappement, qui est couplée à au moins un dispositif de chauffage (8) et qui est réunie avec ou qui débouche dans, en amont dudit au moins un filtre à particules (3), une conduite (4') de gaz d'échappement allant de la turbine (19) à gaz d'échappement vers au moins un filtre à particules (3).

10. Dispositif selon la revendication 9, **caractérisé en ce qu'**aucun catalyseur d'oxydation de NO n'est disposé dans la conduite (4') de gaz d'échappement allant de la turbine (19) à gaz d'échappement vers au moins un filtre à particules (3) et dans la conduite mixte (4") allant de la réunion de la conduite de dérivation (5) avec cette conduite (4') à gaz d'échappement jusqu'au moins un filtre à particules (3).

11. Dispositif selon la revendication 9 ou 10, **caractérisé en ce qu'**au moins un catalyseur chauffant est disposé comme dispositif de chauffage (8) dans la conduite de dérivation (5), le catalyseur chauffant (8) étant de préférence conçu comme catalyseur d'oxydation et un dispositif de dosage (9) étant de préférence prévu, au moyen duquel des hydrocarbures (12) ou analogues peuvent être dosés pour une réaction exothermique dans le flux (16) de gaz d'échappement à chauffer en amont dudit au moins un catalyseur chauffant (8).

12. Dispositif selon l'une quelconque des revendications 9 à 11, **caractérisé en ce qu'**au moins un dispositif (13, 14) d'étranglement et/ou de blocage pouvant être commandé au moyen d'un dispositif (10) de commande et/ou de régulation, au moyen duquel la quantité de gaz d'échappement à dériver du flux (15) de gaz d'échappement peut être réglée, est disposé dans la conduite (4') de gaz d'échappement en amont et/ou en aval de la turbine (19) à gaz d'échappement et en amont de la réunion de la conduite de dérivation (5) avec la conduite (4') de gaz d'échappement et/ou dans la conduite de dérivation (5) avant ledit au moins un dispositif de chauffage (8).

13. Dispositif selon l'une quelconque des revendications 9 à 12, **caractérisé en ce que** la conduite de dérivation (5) est couplée en technique d'écoulement à une conduite (24) à air frais pouvant être bloquée par un processus de blocage, qui permet d'introduire un flux d'air frais côté air d'alimentation ou un flux d'air d'alimentation dérivé dans une conduite d'air d'alimentation en aval de l'embouchure d'une conduite de recyclage de gaz d'échappement dans la conduite de dérivation (5).

14. Dispositif selon l'une quelconque des revendications 11 à 13, **caractérisé en ce qu'**un capteur d'oxygène pour détecter la concentration en O₂ dans le flux de gaz d'échappement et/ou un capteur de température pour détecter la température dans le flux de gaz d'échappement est/sont disposé(s) dans la zone de la conduite de dérivation (5) en aval et/ou en amont du catalyseur chauffant (8).

15. Dispositif selon l'une quelconque des revendications 9 à 14, **caractérisé en ce qu'**au moins un catalyseur d'oxydation (18), en particulier un catalyseur d'oxydation pour l'oxydation d'hydrocarbures est disposé dans la conduite mixte (4") en aval de la réunion de la conduite (4') de gaz d'échappement et de la conduite de dérivation (5) ainsi qu'en amont et/ou en aval du filtre à particules (3), où il est de préférence prévu que ledit au moins un catalyseur d'oxydation (18) disposé en aval de la réunion est conçu comme catalyseur d'oxydation de HC, qui présente une teneur inférieure en composant(s) actif(s) oxydant les hydrocarbures et/ou un volume inférieur à celle/celui d'un catalyseur chauffant (8) également conçu comme catalyseur d'oxydation de HC dans la conduite de dérivation.
